# EUROPÄISCHE PATENTSCHRIFT

(11) **EP 1 860 454 B1**
(45) Veröffentlichungstag und Bekanntmachung des Hinweises auf die Patenterteilung: **06.05.2015**
(21) Anmeldenummer: 07010238.9
(22) Anmeldetag: 23.05.2007
(51) Int. Cl.: G01S 3/40, H04N 17/04, H01Q 1/12

(54) **Messgerät zur Erfassung und Anzeige verschiedener Satellitenpositionen bei einer Satelliten-Empfangsanlage**
Measuring device for recording and displaying various satellite positions in a satellite receiver
Appareil de mesure destiné à la saisie et l'affichage de diverses positions satellites pour une installation de réception par satellite

(30) Priorität: 24.05.2006 DE 202006008445 U
(43) Veröffentlichungstag der Anmeldung: 28.11.2007
(73) Patentinhaber: Schwaiger GmbH, 90579 Langenzenn (DE)
(72) Erfinder: Grau, Thomas, Dipl.-Ing., 90556 Cadolzburg (DE); Neugebauer, Thomas, 91460 Baudenbach (DE); Mohr, Harry, 90579 Langenzenn (DE)
(74) Vertreter: Dreykorn-Lindner, Werner

(56) Entgegenhaltungen:
- EP-A- 0 116 133
- EP-A1- 1 580 833
- DE-U1- 29 513 829
- DE-U1- 29 814 989
- GB-A- 2 221 363
- US-B1- 6 661 373
- US-B1- 6 937 188
- "DigiCorder S1 - Bedinungsanleitung" 2004, TECHNISAT , XP002450491 * Seite 15; Abbildungen 5.7-5.11 *
- "Produktekatalog" 2003, DELTA ELECTRONICS , XP002450492 * Seite 6.20, DiSeqC - Signalindikator *

## Beschreibung

Die Erfindung betrifft in erster Linie ein Messgerät zur Erfassung und Anzeige verschiedener Satellitenpositionen bei einer Satelliten-Empfangsanlage, welches zur Messung von Schaltspannung, Schaltfrequenz und Stromfluss zwischen Satellitenreceiver und Außenelektronik der Satellitenantenne angeordnet ist (Oberbegriff des Patentanspruchs 1).

Für den Empfang von TV-Programmen gibt es heute im Prinzip drei Möglichkeiten entweder den direkten Empfang über die Satellitenantenne (Parabolantenne; dies wäre das eigentliche Satellitenfernsehen), terrestrisch oder über das Kabelfernsehen. Bei der zuerst genannten Möglichkeit übertragen Bodenstationen zunächst über relativ große Parabolantennen die in Signale umcodierter Fernsehsendungen zum Satelliten (so genanntes uplink), wobei der Frequenzbereich zwischen zehn und 13 Gigahertz liegt. Die Signale werden von dem Satelliten in einer Empfangseinheit empfangen und an die Sendeeinheit (Transponder uplink) des Satelliten weitergeleitet. Typische Fernsehsatelliten, z.B. Astra-Satelliten, sind in der Lage, mindestens 16 TV-Programme und den dazugehörigen Ton zu empfangen und zu senden.

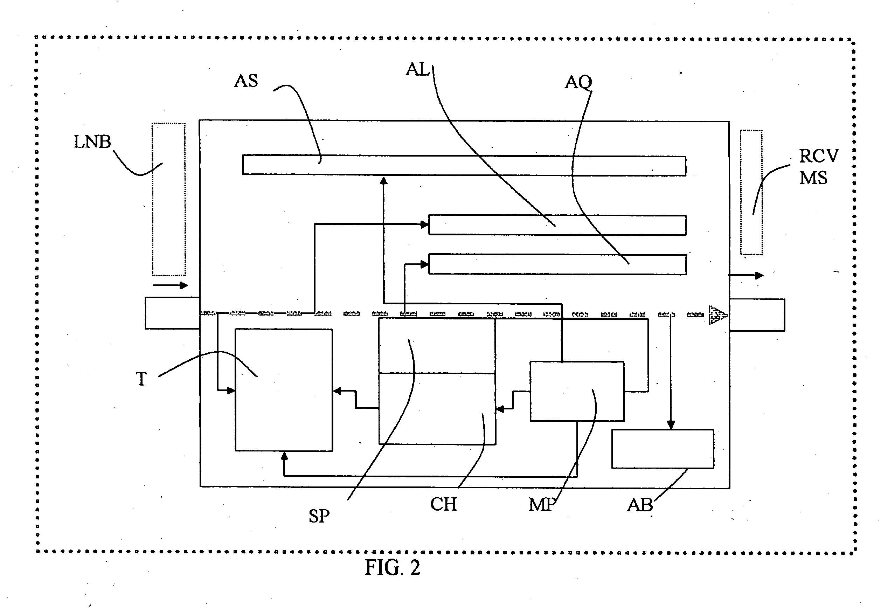

Über die Transponder werden die Signale zu den Empfangsstationen auf der Erde gesandt (so genanntes downlink, Ku-Band: 10.700 MHz bis 12.750 MHz). Beim Kabelfernsehen sind dies große Bodenstationen, die mit dem Kabelnetz verbunden sind und die entsprechenden Sendungen in dieses Netz einspeisen. Beim Direktempfang werden die jeweiligen privaten Haushalte mit Satellitenempfangsanlage zu kleinen Bodenstationen. Die Empfangsanlage besteht im Wesentlichen aus einer Parabolantenne ("Satellitenschüssel") und einem Satellitenempfangsgerät (dem Receiver). Dabei bedient man sich einer Sende- und Empfangstechnik auf der Basis polarisierter Wellen (Wellen breiten sich nur in einer bestimmten Richtung (Schwingungsebene) aus). Der Konverter, welcher auch als LNB (Low Noise Block) oder LNC (Low Noise Converter) bezeichnet wird, verstärkt und konvertiert die Satellitensignale aus dem hohen Frequenzbereich in einen niedrigeren Zwischenfrequenzbereich von 950 bis 2.150 MHz (siehe FIG. 2b).

Zur besseren Ausnutzung des zur Verfügung stehenden Frequenzbereichs werden von den Satelliten Abstrahlungen auf verschiedenen Ebenen durchgeführt. Gängig sind hier die Abstrahlungen auf einer horizontalen und einer vertikalen Ebene sowie die Aufteilung in ein unteres Frequenzband L von 10,7 bis 11,7 GHz und ein oberes Frequenzband H von 11,7 bis 12,75 GHz. Die einzelnen Astra-Satelliten sind untereinander nur ein paar Kilometer (etwa 140 Kilometer) voneinander entfernt. Durch die große Entfernung zur Erde (36 000 Kilometer) "schrumpft" der Abstand zwischen den Satelliten praktisch zu einem Punkt zusammen - dieser befindet sich auf der Position 19,2 ° Ost. Dadurch ergeben sich zwei wesentliche Vorteile:
1. lässt sich das System mühelos mit einer einzigen Antenne empfangen, und 2. gelingt es mit dieser Anordnung, alle ausgestrahlten Kanäle der Astra-Satelliten, welche mit insgesamt 64 Transpondern (Sende-/Empfangseinheit) ausgestattet sind und im sogenannten unteren Frequenzband (10,70 bis 11,70 Gigahertz) arbeiten - auf einmal zu empfangen.

Für die Übertragung digitaler Dienste (z. B. digitales Fernsehen, digitales Radio) sind weitere Satelliten ebenfalls auf der Position der anderen Astra-Einheiten positioniert. Die Satelliten Astra 1E bis 1G arbeiten im oberen Frequenzband (11,70 bis 12,75 Gigahertz) und sind insgesamt mit 56 Transpondern ausgerüstet. Mit Hilfe digitaler Technik (Datenreduktion) ist jeweils ein Transponder der Satelliten Astra 1E bis 1G in der Lage, bis zu zehn digitale Fernsehkanäle zu übertragen (anstatt einem analogen Fernsehkanal). Auf diese Weise gelingt die Übertragung von mehreren hundert digitalen Fernsehkanälen.

Zur Montage und Wartung von Satelliten-Empfangsanlagen werden unterschiedlich ausgestalte Handmessgeräte eingesetzt, insbesondere zur Messung verschiedener Größen bei der Einrichtung oder Reparatur. Beispielsweise kann zur Feinausrichtung einer Parabolantenne ein zwischen Parabolantenne und Satellitenreceiver eingeschleiftes Messgerät eingesetzt werden. Hierzu ist aus der DE 295 05 771.8 U1 der Anmelderin eine Wechselspannungsamplituden-Detektionsschaltung mit einem Transistor mit zwei Schaltanschlüssen und einem Steueranschluss bekannt, wobei
- ein Wechselspannungssignal dem Steueranschluss über einen Kondensator in Serienschaltung zugeführt ist,
- der eine Schaltanschluss mit einem ersten Versorgungspotential und der andere Schaltanschluss über einen ersten Widerstand mit einem zweiten Versorgungspotential verbunden ist,
- der Steueranschluss über einen zweiten Widerstand mit einem der Schaltanschlüsse verbunden ist,
- dem ersten Widerstand ein Kondensator parallel geschaltet ist,
- der erste Widerstand und der zweite Widerstand derart bemessen sind, dass der Transistor im nichtlinearen Kennlinienbereich arbeitet,
- am anderen Schaltanschluss eine von der Amplitude der zugeführten Wechselspannung abhängige Gleichspannung zur Feststellung des Maximums der Gleichspannung abgreifbar ist.

Diese Wechselspannungsamplituden-Detektionsschaltung ist Bestandteil einer Schaltungsanordnung zur relativen Messung des HF-Pegels durch Spitzengleichrichtung und die gleichgerichtete Spannung steuert eine Leuchtanzeige und/oder einen akustischen Signalgeber, die in Abhängigkeit eines Vergleichs mit einer Schwellenwertspannung beim Über- und/oder Unterschreiten derselben aufleuchtet bzw. ein akustisches Signal abgibt. Insbesondere die in der Praxis bekannte Problematik der Ausrichtung in schwierigen Montagesituationen oder bei Sonnenblendung, wird beim Gegenstand der DE 295 05 771.8 U1 der Anmelderin durch die Kombination von gut ablesbarer, eng gestaffelter Leuchtdiodenanzeige (LED light emitting diode) und Minilautsprecher gelöst (wegen der besonderen Gestaltung der Anzeige mit LED's und nicht durch ein Drehspulinstrument). Dadurch steht ein Messgerät zur Verfügung, welches bei einfacher Bedienung eine schnelle und exakte Ausrichtung oder Nachjustierung der Parabolantenne auf den jeweiligen Satelliten gestattet, indem die genaue Ausrichtung (und hoher Empfangspegel der ersten Satelliten -Zwischenfrequenz) der Parabolantenne sowohl durch ein hohes Tonsignal als auch durch das Leuchten aller Leuchtdioden angezeigt wird.

Weiterhin ist aus dem DE 94 11 425 U1 der Anmelderin ein Prüfgerät für Antennenanlagen bekannt. Die über die Antennenleitung oder eine gesonderte Zuführungsleitung an die Schaltungskomponente in einer Kopfstation oder einer Empfangsantenne angelegten Versorgungs- und/oder Schaltspannungen oder Schaltsignale - in Form konstanter Frequenzen oder Impulse - werden einzeln oder über eine Brücke zusammengeschaltet bzw. über einen Messfühler an eine ersten Auswerteschaltung zur Ermittlung des Spannungspegels angelegt. Die erste Auswerteschaltung steuert eine Anzeigevorrichtung, die einen Spannungswert oder einen Spannungsbereich durch Vergleich mit einer Referenzspannung in einer Komparatorschaltung als Bereichswert anzeigt. Weiterhin weist das Prüfgerät eine zweite Auswerteschaltung auf, in der eine Wechselspannung oder eine pulsierende Gleichspannung der Antennenanlage gleichgerichtet und einem Anzeigeelement zur Anzeige zugeführt wird. Die zweite Auswerteschaltung ist über einen Gleichstromentkopplungskondensator von der ersten Auswerteschaltung abgekoppelt. Schließlich ist eine dritten Auswerteschaltung vorgesehen, die mit dem Eingang gekoppelt, welche die Impulse auswertet und das Impulsmuster feststellt und diese bzw. das Muster mit Sollmusterimpuls- oder Mustervorgaben vergleicht und anzeigt, ob diese Impulse oder Muster anliegen.

Weiterhin ist aus dem DE 88 03 438 U1 ein Satelliten-Fernsehantennen-Messgerät mit Zahlenskalasichtfeld unter Angabe der Ergebnisse der Spannungs- und Frequenzmessung bekannt, bei dem mittels eines in einem Metallgehäuse mit einer Frontschalttafel befindlichen Messgerätes, der für die Ausrichtung des beim Signalempfang notwendigen Parabolspiegels vorgesehene Anzeigewert empfangen und als Spannungswert aufgezeigt wird.

Weiterhin ist ein weiteres Testgerät für Satellitenreceiver mit einem Gehäuse, mit einer Eingangsbuchse zum Anschluss an den Satellitenreceiver und mit einer Ausgangsbuchse zum Anschluss an einen LNC aus dem DE 295 13 829 U1 bekannt. Im einzelnen sind in dem Gehäuse Messvorrichtungen zur Messung der Schaltspannung, der Schaltfrequenz und des Stromflusses der Signale zwischen Satellitenreceiver und LNC (Low Noice Converter = LNB) angeordnet und die Messergebnisse werden mittels Leuchtdioden angezeigt.

Durch die steigende Komplexität der Satelliten-Empfangsanlagen, insbesondere Gemeinschaftsanlagen (Einschleusweiche, Multischalter) Einführung digitaler Radio- und TV-Empfänger und neuer Dienste wie Internet, Kombinationsgeräte wie Multimedia-PC, automatische Drehsysteme u.a. sowie zugehöriger digitaler Fernsteuerungskonzepte werden die Anforderungen immer höher. Insbesondere seit der Einführung des Steuerungssystem "DiSEqC" (Digital Satellite Equipment Control) ist die Installation und auch die Fehlersuche mit einem Messgerät für Spannung, Strom und 22KHz-Signal allein, aufwendiger. Um eine komfortable Installations- und Fehlersuchhilfe für eine Satelliten-Empfangsanlage zu ermöglichen, ist aus dem DE 298 14 989.3 U1 der Anmelderin ein zwischen Satellitenreceiver und Außenelektronik der Satellitenantenne angeordnetes Messgerät bekannt, welches einen Speicher mit mindestens einem Speicherbereich zur Zwischenspeicherung von zwischen den Geräten der Satelliten-Empfangsanlage übertragener Daten, einen damit verbundenen Mikroprozessor zur programmierten Auswertung der erfassten Messwerte und Daten, eine alphanumerische Anzeigevorrichtung und/oder eine Sprachausgabeeinrichtung und eine Tastatur aufweist. Durch die Speicherung und Anzeige decodierter Puls-Telegramme des Steuerungssystems "DiSEqC" ist es für den Anlagen-Installateur nunmehr möglich die Master-/Slave Inkompatibiltäten zu analysieren, eine Funktionsprüfung von Multiswitches, LNBs u.a. sowie eine direkte Strom- und Spannungsmessung ohne Verwendung von Zusatzadaptern und Multimeter vorzunehmen. Weiterhin ist von Vorteil, dass eine Vielzahl von DiSEqC-Daten-Telegrammen zwischengespeichert und angezeigt werden können, dass bereits mit der geringen Anzahl von fünf Tasten eine komfortable Bedienung des Messgeräts sowie eine direkte Anzeige von Fernspeisespannung und - strom ermöglicht wird und dass der Speicherinhalt beim Ausschalten erhalten bleibt, so dass auch nachträglich oder erneut die DiSEqC-Daten-Telegramme angezeigt werden können. Weiterhin ist von Vorteil, dass alle grundlegenden DiSEqC-Befehle, vor allem jene, die zur Ansteuerung von Polarisationebene, Frequenzband, SAT-Position dienen, angezeigt werden können und dass die mit dem Einsatz von DiSEqCtauglichen Komponenten in modernen SAT-ZF-Verteilnetzen gestiegenen Ansprüche in messtechnischer Hinsicht erfüllt werden können. Entweder durch Anlegen einer Versorgungsspannung an einem Anschluss des Messgeräts oder durch Handbetätigung eines Betriebsartenschalters der Tastatur wird zwischen der Wiedergabe analoger Messwerte und/oder im Speicher befindlicher Daten und zugehöriger Informationen umgeschaltet. Dadurch, dass automatisch beim Anlegen einer Versorgungsspannung in den DiSEqC-Mode umgeschaltet wird, muss der bei der Analyse von DiSEqC Daten- Telegrammen benötigte höhere Stromverbrauch des Messgeräts nicht von der Batterie oder Akku des Meßgeräts gedeckt werden. Weiterhin ist von Vorteil, dass der Benutzer durch Betätigung einer einzigen Taste, nämlich dem Betriebsartenschalter, zwischen analogen Modi (z.B. Umschaltung vom Receiver mittels einer Schaltspannung (14V/18V) oder einer Schaltfrequenz (Niederfrequenz-Tonsignal, meist 22 kHz)) und DiSEqC-Mode (serieller Steuercode, z.B. DiSEqC-Daten-Telegramm, "DiSEqC" = Digital Satellite Equipment Control, welches ein moduliertes 22 kHz-Signal verwendet) umschalten kann, so dass insgesamt der Bedienungskomfort weiter verbessert wird. Bei vielen unterschiedlichen anzuzeigenden Zeichen bzw. Bedienungsteuerbefehlen kann durch Mehrfachtastenbetätigung der hierfür benötigte Zeichen- bzw. Befehlsvorrat auf einfache Art und Weise zur Verfügung gestellt werden, ohne dass die Anzahl der insgesamt benötigten Tasten erhöht werden muss. Dadurch können auch zukünftige DiSEqC-Daten-Telegramme, welche zwar das gleiche Datenformat jedoch unterschiedliche Bedeutungsinhalte aufweisen, decodiert und analysiert werden. Weiterhin ist von Vorteil, dass nach Kundenwunsch zwischen verschiedenen Bezeichnungskonventionen gewählt werden kann und jeder Hersteller seine eigene Codierung bestimmter Funktionen und Sollwerte, welche fast allen Geräten gemeinsam sind, auf einfache Art und Weise vorprogrammieren kann, beispielsweise Ein-/Ausschalten, Polarisationebene, Stellmotor des automatischen Drehsystems Linkslauf oder Rechtslauf usw.. Vorzugsweise ist der Mikroprozessor mit einem Sprachausgabemodul verbunden und wählt daraus, entsprechend den Messwerten oder Daten und zugehöriger Informationen, Worte oder Satzteile sowie Zahlen aus und gibt diese dann als Sprachsignal an der Sprachausgabeeinrichtung aus. Durch die Sprachausgabe kann das Messgerät auch bei (für das Ablesen) ungünstigen Einsatzbedingungen, wie helles Sonnenlicht eingesetzt werden, zudem ist der Anlagen-Installateur nicht gezwungen, ständig die Anzeigeeinrichtung während des Messvorgangs bei der Installation bzw. Fehlersuche zu beobachten. Schließlich ist durch Handbetätigung einer Taste der Tastatur die Beleuchtung der Anzeigevorrichtung ein- oder ausschaltbar. Durch diese Maßnahme kann das Messgerät auch bei für die Ablesbarkeit ungünstigen Einsatzbedingungen, wie Dunkelheit, eingesetzt werden.

Um die Empfangsbedingungen eines Rundfunksignals, insbesondere den Pegel einer AVR-Spannung zu bestimmen und ohne ein separates Messinstrument auf einer Anzeigeeinrichtung oder durch OSD (On-Screen-Display, d.h. Anzeige auf dem Bildschirm) anzuzeigen, ist aus der DE 43 20 271 C2 eine Vorrichtung mit einer motorgetriebenen Antenne, einem Mikrocomputer für die Steuerung des Betriebs der Vorrichtung, einer Verstärkereinheit für die Verstärkung eines von der Antenne empfangenen Satellitenrundfunksignals, einer Abstimmungs-/Zwischenfrequenzverarbeitungseinheit für das Abstimmen und die Zwischenfrequenzverarbeitung eines Rundfunksignals eines ausgewählten Kanals vom Ausgangssignal der Verstärkereinheit unter Steuerung durch den Mikrocomputer, einem FM-Demodulator für die Demodulation des Tonsignals und des Videosignals vom Ausgangssignal der Abstimmungs-/Zwischenfrequenzverarbeitungseinheit und einem Puffer zum Anlegen des Ausgangssignals des FM-Demodulators an den Bildverarbeitungsschaltkreis bekannt. Die Vorrichtung umfasst außerdem ein AVR-Filter für das Ausfiltern der AVR-Spannung aus dem Ausgangssignal des FM-Demodulators, einen Analog-Digital-Wandler, der als Schnittstelle betrachtet wird und das Ausgangssignal des AVR-Filters in ein digitales Signal umsetzt, um das umgesetzte Signal zum Mikrocomputer zu übermitteln, eine Anzeigeeinrichtung für die Anzeige der Empfangsbedingung des Rundfunksignals unter Steuerung durch den Mikrocomputer, das dem Ausgangssignal des Analog-Digital-Wandlers entspricht, sowie eine Taste für die Wahl des Einstellmodus zur Übermittlung eines Tastensignals, das den Einstellmodus für die Ausrichtung der Antenne aktiviert oder deaktiviert, an den Mikrocomputer. Die Verstärkereinheit enthält ein Breitbandfilter zum Filtern des Satellitenrundfunk-Zwischenfrequenzsignal der Antenne, einen Verstärker für das Verstärken des Ausgangssignals des Breitbandfilters und einen Hochfrequenz-Verstärkungsregler für die Regelung der Verstärkung des Ausgangssignals vom Verstärker entsprechend dem Ausgangssignal des AVR-Filters. Die Abstimmungs-/Zwischenfrequenzverarbeitungseinheit enthält eine Kanalweiche für das Ausfiltern des Rundfunksignals eines ausgewählten Kanals unter Steuerung durch den Mikrocomputer, einen Überlagerungsoszillator zur Erzeugung eines Überlagerungssignals, einen Teiler zum Einstellen der Schwingungsfrequenz des Überlagerungsoszillators durch Teilen des Ausgangssignals des Überlagerungsoszillators und Übermitteln des geteilten Signals zum Mikrocomputer, einen Mischer zum Mischen jedes der Ausgangssignale der Kanalweiche und des Überlagerungsoszillators, einen Verstärker zum Verstärken des Ausgangssignals des Mischers und ein Filter zum Ausfiltern des Zwischenfrequenzsignals aus dem Ausgangssignal des Verstärkers. Dadurch kann der Benutzer die Ausrichtung der motorgetriebenen Antenne auf einfache Weise einstellen, indem er lediglich die Empfangsbedingung eines angezeigten Rundfunksignals beobachtet.

Um eine Vorrichtung und ein Verfahren zur automatischen Positionierung einer Satellitenantenne bei Programmwechsel vorzusehen, das keine zusätzlichen Kabel für die Steuerung und keine zusätzlichen Schaltungen im Satellitenreceiver erfordert, ist aus der DE 44 04 978 C2 eine Antennenanordnung für Satellitenempfang mit einen Antennenreflektor mit einem von einem Stellmotor betätigten, auf dem Läufer eines Spindeltriebes angeordneten Empfangskonverter, und einer mit dem Empfangskonverter und einem Wiedergabegerät über ein Koaxialkabel verbundenen Empfangssteuereinheit mit einem Speicher zur Speicherung der verschiedenen, jeweils einer Sendefrequenz zugeordneten Positionen des Empfangskonverters und mit einem Istwertaufnehmer zur Aufnahme der Position des Empfangskonverters bekannt. Im einzelnen ist vorgesehen, dass der Speicher und der Istwertaufnehmer in der Empfangssteuereinheit angeordnet sind, die die Signale vom Empfangskonverter an das Wiedergabegerät weiterleitet und die eine mit dem Speicher, dem Istwertaufnehmer, einem Regler zur Steuerung des Stellmotors und dem Koaxialkabel verbundene Auswerteelektronik enthält. Die Empfangssteuereinheit empfängt bei Programmumschaltung von dem Wiedergabegerät, das einen Generator zur Erzeugung von Dauersignalen zur Umschaltung des Sendebereichs enthält, über das Koaxialkabel gesendete Signale, die in einem oder mehrfachen kurzzeitigen Unterbrechen des eingeschalteten Dauersignals bzw. Abrufen des Dauersignals, wenn es abgeschaltet ist, bestehen. Entsprechend diesen Signalen werden von der Auswerteeinheit die Ist-Position des Empfangskonverters abgerufen, die dem Programm entsprechende Sollposition aus dem Speicher gelesen, Ist- und Sollwert verglichen und je nach Abweichung der Motor über den Regler so angesteuert, dass der Empfangskonverter die Sollposition erreicht. Die zweifache Verwendung des Dauersignals, nämlich zur Sendebereichseinstellung und zur Übermittlung der Signale zur Positionierung der Antenne, erlaubt es, die Empfangssteuereinrichtung ohne zusätzliche Kabel nahe der Antenne anzubringen. Dadurch wird es möglich, ohne zusätzlichen Speicher und ohne Zusatzelektronik in dem Wiedergabegerät bzw. Satellitenreceiver allein über diesen die automatische Positionierung der Antenne einfach durch Programmwahl zu steuern. Die Abspeicherung der Satellitenpositionen in einer Empfangssteuereinheit direkt am Motor erlaubt darüber hinaus die Vorprogrammierung der Position von Satelliten schon im Werk, was die Justierung der Antenne für den Installateur erheblich vereinfacht. Bei Austausch des Satellitenreceivers ist eine aufwendige Neuprogrammierung der Positionen des Empfangskonverters nicht notwendig.

Weiterhin ist aus US 6,937,188 B1 ein Messgerät für einen Fachmann, nämlich einem Errichter für Satellitenempfangsantennen, zur Erfassung und Anzeige verschiedener Satellitenpositionen beim Ausrichten einer Satellitenantenne einer Satelliten-Empfangsanlage auf einen Satelliten bekannt. Das nach einem LNB-Empfangskonverter der Satellitenantenne angeordnete Messgerät weist einen Tuner für hochfrequente Nutzsignale, einen Speicher zur Speicherung der verschiedenen Kennungen der in der Satelliten-ZF-Ebene liegenden Empfangskanäle, Mittel zur Decodierung und zum Demultiplexen der Empfangskanäle und eine Anzeigevorrichtung in Form eines Displays und einen Display-Controller für die Steuerung des Displays auf, wobei im Display (die Ausrichtung auf den richtigen Satelliten im "install mode" mit einer automatischen Suche nach zu empfangenen Träger-ID Signalen vorausgesetzt) die erfassten Messwerte, nämlich Signalpegel und Bitfehlerrate, und die Satellitennamen (aus einer im Speicher abgespeicherten Liste von Satellitennamen) dargestellt werden können.

Weiterhin ist aus der EP 0 116 133 A1 ein Messgerät für einen Fachmann, nämlich einem Errichter für Satellitenempfangsantennen bekannt, wobei zum Ausrichten der Empfangsantenne das empfangene Signal über eine Außenbaugruppe in eine Zwischenfrequenzlage umgesetzt ist. Im Einzelnen wird vor der Feineinstellung von Azimut- und Elevationswinkel der Empfangsantenne ein ausgangsseitig an die Außenbaugruppe angeschlossener Messempfänger mit Pegelanzeige, der nur in einem schmalen, etwa der zulässigen Drift des in die ZF-Lage umgesetzten Satelliten-Bakensignals entsprechenden Frequenzbereich mit hoher Auflösung einstellbar ist, auf die mittels eines Referenzsenders geringer Leistung eingangsseitig in die Außenbaugruppe eingekoppelte Satelliten-Bakenfrequenz eingestellt. Der Referenzsender, welcher als dielektrisch stabilisierter Resonator-Oszillator ausgebildet ist, ist an den Eingang der Außenbaugruppe angeschlossen und strahlt auf die Empfangsantenne ein. Der Referenzsender und/oder der Messempfänger erhalten ihre Betriebsstromversorgung über die Zuleitung zur Außenbaugruppe und der Messempfänger ist dazu in die Zuleitung eingeschaltet. Alternativ haben der Referenzsender und/oder der Messempfänger jeweils eine eigene Betriebsstromversorgung.

Schließlich ist aus der DE 295 13 829 U1 ein Testgerät für Satellitenreceiver, mit einem Gehäuse, mit einer Eingangsbuchse zum Anschluss an einen Satellitenreceiver und mit einer Ausgangsbuchse zum Anschluss an einen LNC bekannt. Um ein Testgerät für Satellitenreceiver zur Verfügung zu stellen, mit welchem auf einfachste Art und Weise eine umfassende Begutachtung eventuellen Fehlerquellen bei einem Satellitenreceiver möglich ist, sind in dem Gehäuse Messvorrichtungen zur Messung der Schaltspannung, der Schaltfrequenz und des Stromflusses der Signale zwischen Satellitenreceiver und LNC angeordnet. Im Einzelnen misst die Messvorrichtung zur Messung der Schaltspannung ein Vorliegen der Schaltspannung unter 14 V, zwischen 14 und 16 V und über 16 V, die Messvorrichtung zur Messung der Schaltfrequenz das Vorliegen einer Schaltfrequenz im Bereich von 18 bis 26 kHz und das Vorliegen einer Amplitude der Schaltfrequenzspannung im Bereich 0,4 bis 0,8Vss und die Messvorrichtung zur Messung des Stromflusses das Vorliegen eines Stromflusses unter 0,1 A, zwischen 0, 1 und 0,2 A, zwischen 0,2 und 0,3 A, zwischen 0,3 und 0,4 A, zwischen 0,4 und 0,5 A und über 0,5 A. An dem Gehäuse sind Anzeigeeinrichtungen zur Anzeige der Messergebnisse der Messvorrichtungen angeordnet, welche als Leuchtdioden ausgebildet sind. Die Messvorrichtungen und die Anzeigeeinrichtungen sind ohne separate Stromversorgung betreibbar.

Wie die vorstehende Würdigung des Standes der Technik aufzeigt, sind in der Satelliten-Empfangstechnik, insbesondere zur Erfassung und Anzeige verschiedener Satellitenpositionen, unterschiedlich ausgestaltete Mess- oder Prüfgeräte bzw. für dem automatischen TV-Sat-Empfang, bei dem die Antennenposition automatisch bei Programmwechsel eingestellt wird, entsprechende Satellitenempfangsanlagen mit einer motorgetriebenen Antenne bekannt. Dabei sind in der Regel spezielle Hard- und Softwarekomponenten mit einer Reihe von teueren, für die Empfangssteuerung speziell ausgelegten Komponenten erforderlich. Ausgehend von der DE 295 05 771.8 U1 der Anmelderin fehlt in der Praxis jedoch ein Messgerät, welches neben der Anzeige von Qualität und Level zusätzlich die Auswertung und Anzeige des Satelliten, auf den der Spiegel gerichtet ist, ermöglicht.

Der Erfindung liegt gegenüber den bekannten Messgeräten die Aufgabe zugrunde, ein Messgerät und ein Verfahren derart auszugestalten, dass einem ungeübten Benutzer die Auswertung und Anzeige des Satelliten, auf welchen die Satellitenantenne gerichtet ist, ermöglicht wird.

Diese Aufgabe wird, gemäß Patentanspruch 1, durch ein Messgerät zur Erfassung und Anzeige verschiedener Satellitenpositionen bei einer Satelliten-Empfangsanlage gelöst, welches zwischen Satellitenreceiver oder Multischalter und einem LNB-Empfangskonverter der Satellitenantenne angeordnet ist, und welches aufweist:
➢ einen Tuner für hochfrequente Nutzsignale,
➢ einen Speicher zur Speicherung der verschiedenen Kennungen der in der Satelliten-ZF-Ebene liegenden Empfangskanäle,
➢ Mittel zur Decodierung und zum Demultiplexen der Empfangskanäle,
➢ eine erste Anzeigevorrichtung, welche aus LEDs mit räumlich benachbarter Beschriftung zu den LEDs ausgestaltet ist und
➢ einen mit den Mitteln und der ersten Anzeigevorrichtung verbundenen Mikroprozessor zur programmierten Auswertung der erfassten Messwerte und zur Anzeige der jeweiligen Satellitenposition nach Maßgabe der Beschriftung,
➢ so dass nach dem Anschließen des Messgerätes und ohne Betätigung von Tasten das Messgerät betriebsbereit ist, und die Auswertung und Zuordnung der Satellitenposition bei der Anzeige während des Ausrichtens automatisch erfolgt.

Weiterhin wird diese Aufgabe, gemäß Patentanspruch 12, durch ein Verfahren zum Ausrichten einer Satellitenantenne einer Satelliten-Empfangsanlage mit einem zwischen Satellitenreceiver oder Multischalter und einem LNB-Empfangskonverter der Satellitenantenne angeordneten Messgerät gelöst, welches einen Tuner für hochfrequente Nutzsignale, einen Speicher zur Speicherung der verschiedenen Kennungen der in der Satelliten-ZF-Ebene liegenden Empfangskanäle, Mittel zur Decodierung und zum Demultiplexen der Empfangskanäle, einen Mikroprozessor und eine erste Anzeigevorrichtung mit einer Reihe von beabstandet zueinander angeordneter LEDs mit räumlich benachbarter Beschriftung aufweist und nach dem Anschließen des Messgerätes und ohne Betätigung von Tasten das Messgerät betriebsbereit ist, bei dem:
➢ der mit den Mitteln und der ersten Anzeigevorrichtung verbundene Mikroprozessor zunächst eine breitbandige Auswertung der Signale vornimmt und im Falle, dass ein Signal erkannt wird, automatisch das Transpondersignal auswertet und die entsprechende LED der ersten Anzeigevorrichtung aktiviert.

Das erfindungsgemäße Messgerät/Verfahren weist den Vorteil auf, dass einem ungeübten Benutzer auf überraschend einfache Art und Weise eine schnelle und komfortable Erfassung und Anzeige verschiedener Satellitenpositionen beim Ausrichten einer Satellitenantenne auf einen Satelliten ermöglicht wird. Weiterhin ist von Vorteil, dass der Benutzer keine Tasten betätigen muss, sondern die Auswertung und Zuordnung der Satellitenposition bei der Anzeige erfolgt automatisch.

Bei einer bevorzugten Ausgestaltung der Erfindung gemäß Patentanspruch 2, ist zur Anzeige der gemessenen Empfangsfeldstärke eine als LEDs ausgestaltete zweite Anzeigevorrichtung mit räumlich benachbarter Beschriftung und/oder zur Anzeige der gemessenen Bitfehlerrate eine als LEDs ausgestaltete dritte Anzeigevorrichtung mit räumlich benachbarter Beschriftung vorgesehen.

Diese Ausgestaltung der Erfindung weist den Vorteil auf, dass weitere Informationen zur Beurteilung der Empfangskanäle angezeigt, werden, so dass das erfindungsgemäße Messgerät auch zur allgemeinen Diagnose für SAT-ZF-Verteilanlagen geeignet ist. Weiterhin kann das Messgerät dadurch auch bei (für das Ablesen) ungünstigen Einsatzbedingungen, wie helles Sonnenlicht, eingesetzt werden, da infolge der räumlichen Verteilung eine rasche Erkennung und Zuordnung seitens des Benutzers ermöglicht wird.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: eine Draufsicht auf das Gehäuse und
- FIG. 2: das Blockschaltbild einer bevorzugten Ausführungsform des erfindungsgemäßen Messgeräts.

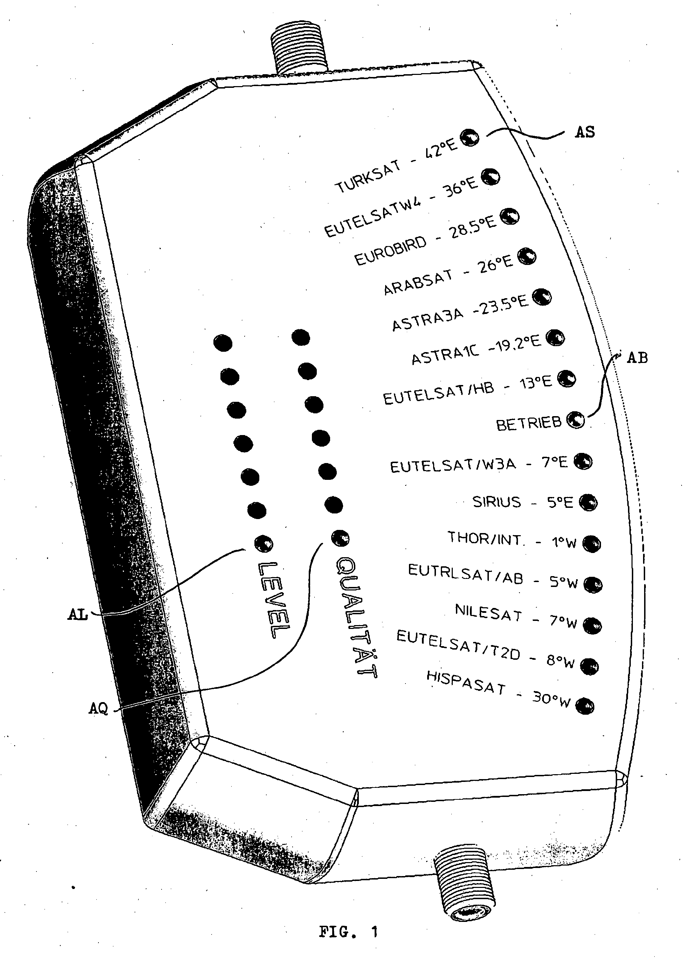

Bei der in **FIG. 1** **und** **2** dargestellten Ausführungsform handelt es sich um ein Messgerät mit äußerst übersichtlicher Anzeige, welches sehr preisgünstig herstellbar ist, und auch von einem ungeübten Benutzer genutzt werden kann. Der in **FIG. 2** dargestellte LNB-Empfangskonverter LNB ist beispielsweise ein Quattro-LNB-Empfangskonverter, welcher die horizontal und vertikal polarisierten Satellitensignale aus dem hohen Frequenzbereich, nämlich ein unteres Frequenzband L von 10,7 bis 11,7 GHz und ein oberes Frequenzband H von 11,7 bis 12,75 GHz, in einen niedrigeren Zwischenfrequenzbereich von 950 bis 2.150 MHz konvertiert.

Zur Erfassung und Anzeige verschiedener Satellitenpositionen bei einer Satelliten-Empfangsanlage ist das erfindungsgemäße Messgerät zwischen Satellitenreceiver RCV oder Multischalter MS und dem LNB-Empfangskonverter LNB der Satellitenantenne angeordnet; in **FIG. 2** ist durch den strichlinierten Pfeil die Übertragungsrichtung der Signale dargestellt. Im Einzelnen weist das Messgerät einen Tuner T für hochfrequente Nutzsignale, einen Speicher SP zur Speicherung der verschiedenen Kennungen der in der Satelliten-ZF-Ebene liegenden Empfangskanäle, Mittel CH zur Decodierung und zum Demultiplexen der Empfangskanäle und einen mit den Mitteln CH und einer ersten Anzeigevorrichtung AS verbundenen Mikroprozessor MP zur programmierten Auswertung der erfassten Messwerte und zur Anzeige der jeweiligen Satellitenposition auf. Vorzugsweise ist zur Anzeige der gemessenen Empfangsfeldstärke eine zweite Anzeigevorrichtung AL, und/oder zur Anzeige der gemessenen Bitfehlerrate eine dritte Anzeigevorrichtung AQ vorgesehen. Die Anzeigevorrichtungen AS, AL, AQ sind als LEDs ausgestaltet und räumlich benachbart zu den LEDs AS, AL, AQ ist eine Beschriftung angebracht (siehe **FIG. 1**). Ferner ist eine Betriebszustandsanzeige AB vorgesehen.

Vorzugsweise sind der Tuner T als DVB-Frontend mit Direktkonversion (kompletter Tuner) und die Mittel CH zur Decodierung und zum Demultiplexen als Chip ausgestaltet (reduzierter Funktionsumfang). Dabei erfolgt zwar ein Suchlauf und Abstimmvorgang auf einen Kanal, jedoch keine Ausgabe von Bild- und Tonsignale, d.h. die eigentlichen Nutzdaten werden nicht verarbeitet. Der Speicher SP kann auch zur Zwischenspeicherung von über eine Antennenleitung AN übertragener Steuersignale oder Daten dienen. Das Messgerät wird, wie bereits erwähnt, in die Antennenleitung AN zwischen LNB-Empfangskonverter LNB und Multischalter MS angeschlossen. Die Stromversorgung erfolgt vom Multischalter MS. Ist kein Multischalter MS verbaut (Antennenleitung AN kommt direkt vom Satellitenreceiver RCV), muss im Haus, anstelle des Satellitenreceiver RCV, ein Netzteil, das die Stromversorgung über die Antennenleitung AN übernimmt, angeschlossen werden. Nach dem Anschließen ist das Gerät betriebsbereit, wobei die Betriebszustandsanzeige AB durch dauerndes Leuchten anzeigt, dass das Messgerät korrekt funktioniert. Die erfindungsgemäße Schaltung kann wahlweise diskret aufgebaut sein oder in einen integrierten Schaltkreis integriert sein. Bei Integration in einen integrierten Schaltkreis sind selbstverständlich Anschlüsse für Versorgungsspannung Vcc, Bezugspotential GND, Referenzspannung VRef sowie Eingangsanschluss In und Ausgangsanschluss Out vorgesehen.

Die Betriebsweise des erfindungsgemäßen Messgeräts ist wie folgt: Mittels Mikroprozessor MP (bzw. einer entsprechenden Steuereinrichtung) erfolgt nun eine breitbandige Auswertung (Summendetektion), was zur schnellen Anzeige des Empfangslevels dient. Ein vorhandenes Eingangssignal führt zu einer sofortigen Darstellung der Empfangsfeldstärke an der zweiten Anzeigevorrichtung AL. Wird ein Signal erkannt, wird im Mikroprozessor MP (bzw. einer entsprechenden Steuereinrichtung) automatisch die Auswertung des Signals vorgenommen. Das Messgerät wertet insbesondere das Transpondersignal aus (NIT des Satelliten) und aktiviert die entsprechende LED der ersten Anzeigevorrichtung AS (Aufleuchten der LED). Kann das Signal keinem bekannten Satelliten zugeordnet werden, signalisiert das Gerät dies durch Blinken der Betriebszustandsanzeige AB. Das Blinken erlischt, wenn die Feldstärke des Signals stark abnimmt (kein Eingangssignal). Zusätzlich zur Zuordnung des Satelliten, erfolgt die Berechnung der BER (Bit Error Rate) und deren Darstellung an der dritten Anzeigevorrichtung AQ.

Die Messung wird wie folgt durchgeführt: Zunächst wird das Gerät wie oben beschrieben angeschlossen. Danach wird die Satellitenantenne (SAT-Schüssel nicht dargestellt) langsam gedreht bis ein Signal detektiert wird, und dieses ist dann auf Maximum zu bringen. Kurz darauf zeigt das Messgerät den Satelliten und die BER an. Ist der falsche Satellit eingestellt, SAT-Schüssel in gewünschter Richtung weiterdrehen (Messung wie angegeben). Ist der gewünschte Satellit gefunden, kann das Antennensystem auf maximale Feldstärke und geringste BER eingestellt werden.

In dem in **FIG. 1** dargestellten Ausführungsbeispiel sind 11 LEDs für die erste Anzeigevorrichtung AS vorgesehen, wobei beispielsweise folgende Satelliten erkannt werden:

| | |
|---|---|
| HISPASAT 1A/1B/1C | 30° West |
| TELECOM 2D | 8° West |
| NILESAT 101/102 THOR 1 | 7° West |
| STELLAT5/ATLANTIC B.3 | 5° West |
| AMOS 1 | 4° West |
| THOR 2/3 | 1° West |
| SIRIUS 2/3 | 5° Ost |
| EUTELSAT W3 | 7° Ost |
| HOT BIRD 1-6 | 13° Ost |
| ASTRA 1B-H/2C | 19,2° Ost |
| ASTRA 3A | 23,5° Ost |
| ARABSAT 2A/3° | 26° Ost |
| ASTRA 2 2A/B/D | 28,2° Ost |
| Eurobird 1 | 28,5° Ost |
| EUTELSAT W4 | 36° Ost |
| HELAS SAT 1 | 39° Ost |
| Türksat 1C/Eurasiasat 1 | 42° Ost |

Weiterhin weist das Messgerät einen Eingang (High class F connector female 75 Ω) und einen Ausgang (High class F connector female 75Ω) auf. Gemäß **FIG. 1** sind für die Signalstärke sechs LEDs an der zweiten Anzeigevorrichtung AL und für die Qualität sechs LEDs an der dritten Anzeigevorrichtung AQ vorgesehen. Die Messzeit bis ein Satellit erkannt wird, beträgt beispielsweise für den Pegel max. 1 sec. und für die Position max. 15 sec. Die Spannungsversorgung beträgt 18V/14V Toleranz ±5% und die Leistungsaufnahme ist Max. ≤ 7 W. Die Betriebszustandsanzeige AB ist Gelb und die Abmessungen des erfindungsgemäßen Messgeräts sind 80×150×40mm; die Betriebstemperatur: -10 bis +50 °C.

Das erfindungsgemäße Messgerät ermöglicht auch einem ungeübten Benutzer die Ausrichtung der SAT-Antenne mit Darstellung der Signalstärke, Qualität (BER) und SAT-Name. Das Gehäuse (siehe **FIG. 1**) zeichnet sich durch Stoßfestigkeit, Spritzwasserbeständigkeit, hohe Leuchtkraft der LED, Abriebfestigkeit der Bedruckung und eine Öse für Bandbefestigung zum Umhängen aus.

In Weiterbildung der Erfindung kann der Speicher SP austauschbar sein bzw. einen austauschbaren Speicherbereich für unterschiedliche Codetabellen, welche Gerätedatenformate, Funktionsdaten und Codedaten zum Ausführen von Befehlsfunktionen einer Mehrzahl von Geräten unterschiedlicher Hersteller bzw. den einzelnen Satelliten zugeordnete Daten aufweisen und der Mikroprozessor MP kann anhand der gespeicherten Codetabelle den Daten eine unterschiedliche Information zuordnen; die Anzeigevorrichtungen AS, AL, AQ, AB können auch als eine Anzeige von alphanumerischen und/oder graphischen Zeichen (auch Markierungszeichen wie beispielsweise farbliche Hervorhebung) ausgestaltet werden, wobei diesen Zeichen/Funktionen zugeordnete Informationen wie Text und/oder Bildinformationen und Hilfetexte, welche beispielsweise die Funktionen oder eine Programmierung erläutern, in weitem Rahmen benutzerindividuell gestaltet werden können; es kann ein Sprachausgabemodul/Lautsprecher vorgesehen werden, wobei der Mikroprozessor MP mit diesen verbunden ist und entsprechend den Messwerten oder Daten und zugehörigen Informationen, Töne, Worte oder Satzteile sowie Zahlen ausliest und diese dann als Sprachsignal an der Sprachausgabeeinrichtung/Lautsprecher ausgibt; durch Handbetätigung einer Taste einer Tastatur kann die Beleuchtung der Anzeigevorrichtung ein- oder ausgeschalten werden; das Messgerät kann eine Schnittstelleneinrichtung zur Eingabe/Ausgabe im Speicher SP befindlicher Messwerte, Daten und Informationen aufweisen; der Mikroprozessor MP kann sowohl zur Anzeigensteuerung als auch als Analog-Digital-Wandler oder Komparator bei der Messung eingesetzt werden; u.a.

## Patentansprüche

1. Messgerät zur Erfassung und Anzeige verschiedener Satellitenpositionen beim Ausrichten einer Satellitenantenne einer Satelliten-Empfangsanlage, welches zwischen Satellitenreceiver (RCV) oder Multischalter (MS) und einem LNB-Empfangskonverter (LNB) der Satellitenantenne angeordnet ist, und) welches aufweist:
➢ einen Tuner (T) für hochfrequente Nutzsignale,
➢ einen Speicher (SP) zur Speicherung der verschiedenen Kennungen der in der Satelliten-ZF-Ebene liegenden Empfangskanäle,
➢ Mittel (CH) zur Decodierung und zum Demultiplexen der Empfangskanäle,
➢ eine erste Anzeigevorrichtung (AS), welche aus LEDs mit räumlich benachbarter Beschriftung zu den LEDs ausgestaltet ist und
➢ einen mit den Mitteln (CH) und der ersten Anzeigevorrichtung (AS) verbundenen Mikroprozessor (MP) zur programmierten Auswertung der erfassten Messwerte und zur Anzeige der jeweiligen Satellitenposition nach Maßgabe der Beschriftung,
➢ so dass nach dem Anschließen des Messgerätes und ohne Betätigung von Tasten das Messgerät betriebsbereit ist, und die Auswertung und Zuordnung der Satellitenposition bei der Anzeige während des Ausrichtens automatisch erfolgt.

2. Messgerät nach Anspruch 1, **dadurch gekennzeichnet, dass** zur Anzeige der gemessenen Empfangsfeldstärke eine als LEDs ausgestaltete zweite Anzeigevorrichtung (AL) mit räumlich benachbarter Beschriftung und/oder zur Anzeige der gemessenen Bitfehlerrate eine als LEDs ausgestaltete dritte Anzeigevorrichtung (AQ) mit räumlich benachbarter Beschriftung vorgesehen ist.

3. Messgerät nach Anspruch 1 **dadurch gekennzeichnet, dass** die erste Anzeigevorrichtung (AS) als eine Reihe von beabstandet zueinander angeordneter und vom Mikroprozessor (MP) entsprechend der zugeordneten Beschriftung aktivierbarer LEDs ausgestaltet ist.

4. Messgerät nach Anspruch 1, **dadurch gekennzeichnet, dass** die zweite und dritte Anzeigevorrichtung (AL, AQ) jeweils mehrere zueinander beabstandet angeordnete und vom Mikroprozessor (MP) entsprechend der gemessenen Empfangsfeldstärke oder Bitfehlerrate aktivierbare LEDs ausgestaltet sind.

5. Messgerät nach Anspruch 1, **dadurch gekennzeichnet, dass** eine als LED ausgestaltete Betriebszustandsanzeige (AB) vorgesehen ist.

6. Messgerät nach Anspruch 1, **dadurch gekennzeichnet, dass** der Tuner (T) als DVB-Frontend mit Direktkonversion ausgestaltet ist.

7. Messgerät nach Anspruch 1, **dadurch gekennzeichnet, dass** die Mittel (CH) zur Decodierung und zum Demultiplexen als Chip ausgestaltet sind.

8. Messgerät nach Anspruch 1, **dadurch gekennzeichnet, dass** der Speicher (SP) zur Zwischenspeicherung von über eine Antennenleitung (AN) übertragener Steuersignale oder Daten dient.

9. Messgerät nach Anspruch 8, **dadurch gekennzeichnet, dass** der Speicher (SP) austauschbar ist oder einen austauschbaren Speicherbereich für unterschiedliche Codetabellen enthält, welche Gerätedatenformate, Funktionsdaten und Codedaten zum Ausführen von Befehlsfunktionen einer Mehrzahl von Geräten unterschiedlicher Hersteller oder den einzelnen Satelliten zugeordnete Daten aufweisen und dass der Mikroprozessor (MP) anhand der gespeicherten Codetabelle den Daten eine unterschiedliche Information zuordnet.

10. Messgerät nach Anspruch 1, **gekennzeichnet durch** die Spannungsversorgung über eine Antennenleitung (AN).

11. Messgerät nach Anspruch 1, **dadurch gekennzeichnet, dass** die Beschriftung aus Satellitennamen und dessen geostationärer Position auf dem Gehäuse des Messgeräts aufgedruckt ist.

12. Verfahren zum Ausrichten einer Satellitenantenne einer Satelliten-Empfangsanlage mit einem zwischen Satellitenreceiver (RCV) oder Multischalter (MS) und einem LNB-Empfangskonverter (LNB) der Satellitenantenne angeordneten Messgerät, welches einen Tuner (T) für hochfrequente Nutzsignale, einen Speicher (SP) zur Speicherung der verschiedenen Kennungen der in der Satelliten-ZF-Ebene liegenden Empfangskanäle, Mittel (CH) zur Decodierung und zum Demultiplexen der Empfangskanäle, einen Mikroprozessor (MP) und eine erste Anzeigevorrichtung (AS) mit einer Reihe von beabstandet zueinander angeordneter LEDs mit räumlich benachbarter Beschriftung aufweist und nach dem Anschließen des Messgerätes und ohne Betätigung von Tasten das Messgerät betriebsbereit ist, bei dem:
➢ der mit den Mitteln (CH) und der ersten Anzeigevorrichtung (AS) verbundene Mikroprozessor (MP) zunächst eine breitbandige Auswertung der Signale vornimmt und im Falle, dass ein Signal erkannt wird, automatisch das Transpondersignal auswertet und die entsprechende LED der ersten Anzeigevorrichtung (AS) aktiviert.

13. Verfahren nach Anspruch 12, **dadurch gekennzeichnet, dass** zunächst vom Benutzer die Satellitenantenne langsam gedreht wird, bis der Microprozessor (MP) durch breitbandiges Auswerten (Summendetektion) ein Signal detektiert, wobei dieses vorhandene Eingangssignal zu einer sofortigen Darstellung der gemessenen Empfangsfeldstäke an einer zweiten Anzeigevorrichtung (AL) führt, und wobei der Mikroprozessor (MP) kurz darauf die entsprechende LED der ersten Anzeigevorrichtung (AS) aktiviert und die gemessene Bitfehlerrate, welche an einer dritten Anzeigevorrichtung (AQ) dargestellt wird, anzeigt, dass - falls der falsche Satellit eingestellt ist - vom Benutzer die Satellitenantenne in gewünschter Richtung weitergedreht wird und dass - wenn der gewünschte Satellit gefunden ist - vom Benutzer durch Drehen das Antennensystem auf maximale Feldstärke und geringste Bitfehlerrate eingestellt wird.

14. Verfahren nach Anspruch 12 oder 13, bei dem das Messgerät eine Betriebzustandsanzeige (AB) aufweist, **dadurch gekennzeichnet, dass** nach dem Anschließen des Messgeräts die Betriebszustandsanzeige (AB) durch dauerndes Leuchten anzeigt, dass das Messgerät korrekt funktioniert, dass - wenn das Eingangsignal keinem bekannten Satelliten zugeordnet werden kann - die Betriebszustandsanzeige (AB) blinkt und dass das Blinken erlischt, wenn die gemessene Feldstärke des Signals stark abnimmt (kein Eingangssignal).

15. Verfahren nach Anspruch 12, **dadurch gekennzeichnet, dass** ein Sprachausgabemodul/Lautsprecher vorgesehen ist, wobei der Mikroprozessor (MP) mit diesem verbunden ist und entsprechend den Messwerten oder Daten und zugehörigen Informationen, Töne, Worte oder Satzteile sowie Zahlen ausliest und diese dann als Sprachsignal an der Sprachausgabeeinrichtung/Lautsprecher ausgibt.

## Claims

1. Measuring device for monitoring and displaying different satellite positions in the alignment of a satellite antenna belonging to a satellite receiver, that measuring device is arranged between the satellite receiver (RCV) or a multi-switch (MS) and a LNB downconverter (LNB) of that satellite antenna, and which comprises:
➢ a tuner (T) for high frequency useful signals,
➢ a memory (SP) for storing the identifiers of the various reception channels lying in the satellite IF-level.
➢ means (CH) for decoding and demultiplexing of said reception channels,
➢ a first display device (AS), which comprises LEDs having a label spatially adjacent to said LED,
➢ a microprocessor (MP) associated to the means (CH) for decoding and demultiplexing and a first display apparatus (AS) for the programmed evaluation of the measured values and for displaying each satellite position according to said label,
➢ so that after connecting the measuring device and without actuation of buttons the measuring device is activated and that the evaluation and allocation of satellite position with the display takes place automatically by simply aligning.

2. A measuring device according to claim 1, **characterized in that** for displaying the measured received field strength a second display apparatus (AL) designed as LEDs with a label spatially adjacent and/or for displaying the measured bit error rate, a third display device (AQ) designed as LEDs with a label spatially adjacent is provided.

3. A measuring device according to claim 1, **characterized in that** the first display apparatus (AS) is designed as LEDs arranged in a row and at a distance from one another, which can be activated by the microprocessor (MP) according to the label.

4. A measuring device according to claim 1, **characterized in that** second and third display apparatus (AL, AQ) each is designed as several LEDs having a distance from one another, which can be activated by the microprocessor (MP) according to measured received field strength or to measured bit error rate.

5. A measuring device according to claim 1, **characterized in that** an operating state indicator (AB) being provided.

6. A measuring device according to claim 1, **characterized in that** the tuner (T) is designed as a DVB-Frontend with direct conversion.

7. A measuring device according to claim 1, **characterized in that** the means (CH) for decoding and demultiplexing are configured as a chip.

8. A measuring device according to claim 1, **characterized in that** the memory (SP) is used for temporarily storing data or control signals transmitted via an antenna line (AN).

9. A measuring device according to claim 8, **characterized in that** the memory (SP) is interchangeable or contains a removable storage area for different code tables, which have device data formats, function data and code data for executing command functions of a plurality of devices of different manufacturers or have the individual satellites associated data, and that the microprocessor (MP) associates on the basis of the stored code table data a different information.

10. A measuring device according to claim 1, **characterized by** the voltage supply via an antenna line (AN).

11. A measuring device according to claim 1, **characterized in that** the label comprising satellite name and its geostationary position is printed on the housing of said measuring device.

12. A method for aligning a satellite antenna by a measuring device arranged between the satellite receiver (RCV) or a multi-switch (MS) and a LNB downconverter (LNB) of that satellite antenna, the measuring device comprises a tuner (T) for high frequency useful signals, a memory (SP) for storing the different identifiers of the various reception channels lying in the satellite IF-level, means (CH) for decoding and demultiplexing of said reception channels, a microprocessor (MP) and a first display device (AS), which comprises LEDs having a label spatially adjacent to said LED and after connecting the measuring device and without actuation of buttons the measuring device is activated, whereby:
➢ first the microprocessor (MP) associated to the means (CH) and the first display apparatus (AS) takes a broadband evaluation of the signals and in the event of recognizing a signal is automatically evaluating the transponder signal and activating the corresponding LED of the first display apparatus (AS).

13. A method according to claim 12, **characterized in that** the user is rotating the satellite antenna slowly until the microprocessor (MP) by a broadband evaluation (sum detection) detects a signal, whereas an existing input signal results in an immediate representation of the received field strength at the second display apparatus (AL) and whereas the microprocessor (MP) shortly after activates the corresponding LED of the first display apparatus (AS) and displays the measured bit error rate on a third display device (AQ), that - if it is set to the wrong satellite - the satellite antenna will be rotate by the user in the desired direction and that - if the desired satellite is found - the antenna system for maximum field strength and the lowest BER can be adjusted by the user.

14. A method according to claim12 or 13 whereas the measuring device having an operating state indicator (AB), **characterized in that** after connecting the measuring device state indicator (AB) by continuously shining displays a correct working of the measuring device, that - if the input signal can be assigned to any known satellites - the operating state indicator (AB) is flashing and that the flashing stops if the measured field strength of the input signal decreases significantly (no input signal).

15. A method according to claim 12, **characterized in that** a voice synthesizer / speakers are provided, wherein the microprocessor MP associated with these and corresponding to the measured values or data and associated information, reads out sounds, words or phrases as well as numbers and then outputs a voice signal to the voice output device/speakers.

## Revendications

1. Un instrument de mesure pour la surveillance et l'affichage des différentes positions de satellite lors de l'alignement une antenne satellite d'un système de réception, l'instrument de mesure est disposé entre le récepteur satellite (RCV) ou multi-switch (MS) et un convertisseur abaisseur de LNB (LNB), et comprenant:
➢un tuner (T) pour des signaux utiles à haute fréquence,
➢une mémoire (SP) pour stocker les identifications différents des canaux satellite se situent dans les IF-niveau de la réception,
➢des moyens (CH) pour le décodage et de démultiplexage des canaux de réception,
➢un premier dispositif d'affichage (AS), qui comprenant des diodes électroluminescentes dans l'espace à côté une étiquette est attachée et
➢une microprocesseur (MP) associé pour l'évaluation programmée des valeurs mesurées et afficher chaque position du satellite avec les moyens (CH) et le premier dispositif d'affichage (AS) selon d'un étiquetage,
➢pour que après avoir branché l'instrument de mesure et sans agissant sur leurs boutons l'instrument de mesure est opérationnel et que pendant l' alignement l'évaluation et l'affectation de position du satellite sur l'affichage est automatiquement effectué.

2. Instrument de mesure selon la revendication 1, **caractérisé en ce que** pour l'affichage de l'intensité du champ reçu mesuré, un second dispositif d'affichage (AL) configurée par LEDs avec une étiquette de l'espace adjacents, et /ou pour l'affichage du taux d'erreurs mesuré sur les bits, un troisième dispositif d'affichage (AQ) configurée par LEDs avec une étiquette de l'espace adjacents est prévu.

3. Instrument de mesure selon la revendication 1, **caractérisé en ce que** le premier dispositif d'affichage (AS) est configurée comme une série de LEDs et espacées l'une de l'autre et activable avec le microprocesseur (MP) selon de l'étiquette associée.

4. Instrument de mesure selon la revendication 1, **caractérisé en ce que** second et troisième dispositif d'affichage (AS) sont configurée comme une série de LEDs et espacées l'une de l'autre et activable avec le microprocesseur (MP) selon de l'intensité du champ reçu mesuré ou du taux d'erreurs mesuré sur les bits.

5. Instrument de mesure selon la revendication 1, **caractérisé en ce qu'**un indicateur d'état de fonctionnement (AB) étant prévu.

6. Instrument de mesure selon la revendication 1, **caractérisé en ce que** le tuner (T) est configurés comme un DVB-frontend avec une conversion directe.

7. Instrument de mesure selon la revendication 1, **caractérisé en ce que** les moyens (CH) sont configurés pour le décodage et de démultiplexage en tant que puce.

8. Instrument de mesure selon la revendication 1, **caractérisé en ce que** la mémoire (SP) pour mémoriser temporairement des données ou signaux de commande transmises via une ligne d'antenne (AN) est utilisé.

9. Instrument de mesure selon la revendication 8, **caractérisé en ce que** la mémoire (SP) est interchangeable ou contient une zone de stockage amovible pour différentes tables de codes, qui ont des formats de périphériques de données, des données de fonction et des données de code pour exécuter des fonctions de commande d'une pluralité de dispositifs de différents fabricants ou les satellites individuels associés données, et que le microprocesseur (MP) sur la base des données de table de codes mémorisée associant des données une information différente.

10. Instrument de mesure selon la revendication 1, **caractérisé par** l'alimentation en tension par l'intermédiaire d'une ligne d'antenne (AN).

11. Instrument de mesure selon la revendication 1, **caractérisé en ce que** l'étiquette avec le nom satellite et sa position géostationnaire sont imprimée sur un boîtier du instrument de mesure.

12. Un procédé pour l'alignement une antenne satellite d'un système de réception, avec un instrument de mesure, qui est disposé entre le récepteur satellite (RCV) ou multi-switch (MS) et un convertisseur abaisseur de LNB (LNB), l'instrument de mesure comprennent un tuner (T) pour des signaux utiles à haute fréquence, une mémoire (SP) pour stocker les identifications différents des canaux satellite se situent dans les IF-niveau de la réception, des moyens (CH) pour le décodage et de démultiplexage des canaux de réception, une microprocesseur (MP) et un premier dispositif d'affichage (AS) avec une série de LEDs espacées l'une de l'autre et un étiquette de l'espace adjacents et que après avoir branché l'instrument de mesure et sans agissant sur leurs boutons l'instrument de mesure est opérationnel, dans lequel:
➢le microprocesseur (MP), connecté avec les moyens (CH) et le premier dispositif d'affichage (AS), d'abord effectuer une analyse à large bande et en le cas un signal est détecté, le microprocesseur (MP) évaluer le signal de transpondeur et activer la LED correspondante du premier dispositif d'affichage (AS).

13. Procédé selon la revendication 12, **caractérisé en ce que** débord l'antenne satellite est tourné lentement par un utilisateur jusqu'à le microprocesseur (MP) par une analyse à large bande (somme de détection) détecter un signal, et que si le signal d'entrée est disponible ont pour conséquence une représentation immédiate de l'intensité de champ reçue mesuré au niveau du second dispositif d'affichage (AL) et que le microprocesseur (MP), peu après, activé correspondante LED du premier dispositif d'affichage (AS) et le taux d'erreurs mesuré sur les bits est affichée sur le troisième dispositif d'affichage (AQ) et que - if est réglé sur le mauvais satellite- l'utilisateur continuer à tourner l'antenne satellite dans le sens souhaité et que - si le satellite choisi est trouvez- l'utilisateur tourné le système d'antenne jusqu'à l'intensité de champ maximale et le taux d'erreurs mesuré sur les bits le plus bas peut être réglé.

14. Procédé selon la revendication 12 ou 13, **caractérisé en ce que** l'instrument de mesure à un indicateur d'état de fonctionnement (AB), et que après avoir connecté l'instrument de mesure, l'indicateur d'état de fonctionnement (AB) par la lumière constante indique que l'instrument de mesure fonctionne correctement, et que l'indicateur d'état de fonctionnement (AB) clignote - si le signal d'entrée ne peut être affecté à des satellites connus - et que l'indicateur d'état de fonctionnement (AB) arrête de clignoter lorsque l'intensité du champ mesurée du signal diminue fortement (aucun signal d'entrée).

15. Procédé selon la revendication 12, **caractérisé en ce que**; il peut être un synthétiseur vocal / haut-parleurs, dans lequel le microprocesseur (MP) associé à ceux-ci et correspondant aux valeurs ou des données mesurées et les informations associées, lit des sons, des mots ou des phrases, des chiffres, et le microprocesseur (MP) émet ensuite un signal vocal au dispositif de sortie vocale/haut-parleurs.
